(19) Europäisches Patentamt
European Patent Office
Office européen des brevets

(11) **EP 2 207 273 B1**

(12) **EUROPEAN PATENT SPECIFICATION**

(45) Date of publication and mention
of the grant of the patent:
**06.01.2016 Bulletin 2016/01**

(51) Int Cl.:
***H04B 7/08*** *(2006.01)*

(21) Application number: **09450089.9**

(22) Date of filing: **23.04.2009**

(54) **Method and device for receiving digital audio data**

Verfahren und Gerät zum Empfangen digitaler Audiodaten

Procédé et dispositif de réception de données audio numériques

(84) Designated Contracting States:
**AT DE FR GB**

(30) Priority: **09.01.2009 AT 332009**

(43) Date of publication of application:
**14.07.2010 Bulletin 2010/28**

(73) Proprietor: **AKG Acoustics GmbH**
**1230 Wien (AT)**

(72) Inventors:
• **Lindenbauer, Thomas**
**1030 Wien (AT)**

• **Furtner, Gerhard**
**3441 Judenau (AT)**

(74) Representative: **Patentanwälte**
**Barger, Piso & Partner**
**Operngasse 4**
**P.O. Box 96**
**1010 Wien (AT)**

(56) References cited:
**EP-A2- 0 755 131      DE-A1- 4 236 088**
**US-A- 4 942 622**

**Description**

The invention pertains to a method for receiving digital audio data with a diversity receiver, which has at least two antennas and at least one receiving channel which can be switched from one antenna to another antenna; it also contains a diversity receiving device with at least two antennas to receive the radio signal and at least one receiving channel, in which a switching unit is provided, with which the receiving channel can be switched from one antenna to another antenna, each according to the preamble of Claims 1 and 2.

The invention therefore contains a type of an antenna-diversity receiver, which can be used, especially in professional, digital wireless microphone systems. Such systems are used for stage microphones in the areas of tour sound, installed sound and broadcast and must satisfy high receiving robustness, very limited latency, high audio quality and audio transmission as free of interruption as possible. In order to guarantee a radio link that accounts for these requirements, two or more receiving antennas are generally used in such systems and the transmitted audio data are coded with an error tolerances method. Coding can then be conceived, so that individual bit errors are inaudible in the foreground or are made inaudible by error-correcting methods. In each case, reliable bit-error recognition is necessary in such systems, which monitors the audio quality at each time of the transmission. The RF receiving quality at the receiver is also continuously determined and the most favourable antenna selected for the receiving channel according to receiving quality. In order to be able to determine continuously at each time which receiving quality of an antenna prevails at the current receiving frequency, it is necessary to demodulate the received signal of each antenna, which would require a separate receiving unit per antenna and receiving frequency.

The US 4,942,622 A discloses a mobile radio-receiver system, wherein a reproduction characteristic of a reception signal, e.g. a sound signal, which has noise superimposed thereon is improved. The mobile radio-receiver system includes a space diversity unit, which receives two reception signals and selects the reception signal with smaller noise. The quality of the selected signal will be improved by a signal prediction unit, which ignores the selected signal for a predetermined time, in which large noise remains in the selected signal. The noise will be detected with a noise detection means. For this predetermined time a new predicted signal is used, which will be calculated by a linear extrapolation by using two previous normal data. So the noise detection means, according to the US 4,942,622 A, is essential, because only a detected noisy signal will be ignored by the signal prediction unit, so that a quality of a reproduction sound from the FM radio-receiver is greatly improved. The occurred "crackling" during the switch form one reception signal to the other will not be considered.

The WO 96/04653 discloses a method to improve the transmission quality of block-coded audio signals in audio communications systems. Breaks in the audio signal resulting from transmission errors are replaced with a previously generated substitution signal. The substitution signal is generated with a temporarily stored signal segment, which immediately precedes a current signal segment. This substitution signal will be inserted it in the gap, when the current signal segment is disrupted.

The US 5,697,075 A discloses a diversity apparatus for a global positioning system having two antennas with corresponding signal paths. The antenna of each signal path is directly coupled to the input of a low noise amplifier (LNA) supplied by a voltage source. Variable signal level attenuators in form of pin-diodes are provided downwards in the signal paths which subsequently are combined to a common data line. A capacitor is connected between the connection of the LNA voltage source to the signal path and the variable signal level attenuator. The output signal of each LNA is transferred to a coupling line connected to a selector providing in dependence of the signal level of each signal path an appropriate current to the pin-diode, in order to disconnect the signal path having a low level from the common data line.

The actual receiver part comprising a filter, a base frequency generator, an amplifier and a demodulator is provided within the common data line for decoding the signal transferred from one of the two antennas. The disadvantage of such a system consists in a high power consumption of the diversity part of the receiving system. The circuit design of each signal path makes it necessary to provide two power supplies, one stationary supply for the LNA and one variable supply for the pin-diode. The necessary amount of electronic components and the high power consumption makes this diversity receiver a high cost product.

In other prior art antenna diversity receivers for professional wireless systems the RF signals coming from two antennas are directly switched (without amplifying) in dependence of the RF-level and/or the gradient of the signal strength of the actual antenna. However, this increases the noise figure of the receiver caused by the attenuation of the antenna switch (being especially a problem in analogue transmitting systems).

In a wireless radio transmission the quality of a transmitted low frequency signal has to be kept as good as possible, that means that the signal to noise ratio (SNR) has to be as high as possible. For professional wireless systems it is a big benefit, if a diversity system can be used. With a diversity system the negative influences on the transmitted audio-quality caused by the RF-signal fading effects (dropouts) during the movement of the actor can be reduced or even avoided. This is the reason why professional wireless systems have diversity systems for their receiver installed.

Generally two kinds of diversity systems are known from prior art:

Firstly, systems often denoted by "true diversity": From the technical point of view the best diversity system is the "true diversity", where two identical signal paths are realized each of them having a complete diversity part and a complete receiver part. In dependence of the RF-level (indicated by the Receiver-Signal-Strength-Indicator (RSSI) of the demodulator) the demodulated audio signal with the higher RF-level is used. The disadvantages for this kind of system are

- increased bill of material,
- increased amount of necessary components and their
- power consumption.

(These drawbacks are in contradiction to the requirements for mobile receivers which should be as small as possible and where the battery life time should be as long as possible.)

Secondly, the so called "antenna diversity" is known: The two signal paths with the antennas are combined to a common path having one RF receiver. In dependence of the changing RSSI-signal (or if the RF/RSSI-level falls below a defined threshold) the active antenna will be changed under use of a semiconductor-switch (pin-diode). The advantage of this system obviously is the low price, because only one RF module is necessary. The disadvantages are:

- not all dropouts can be avoided (this is highly independent of the algorithm which is used to make a prediction of the estimated RF level situation of the second antenna),
- the commonly used PIN-diode switches need additional current-consumption (bad for the battery life time of mobile receivers) and this PIN-diode switches cause additional attenuation which increases the noise figure of the receiver (sensitivity and acting-range decreases).

Examples of various kinds of diversity systems are given in the following prior art documents. US 6,871,054 B2 discloses a two antenna diversity system by controlling bias voltages on pin-diodes. By increasing the reverse bias voltage impressed upon a pin-diode, an RF signal impressed upon the diode is increasingly attenuated. Downwards the pin-diodes the two signal paths are combined to a common line towards a receiver. Similar systems based on the same principle are known from block diagrams of JP 2 305 234, JP 2001 326593, JP 61 073 437, and JP 10 163 941.

From figures of JP 8 107 306 a diversity antenna pattern included in the glass of vehicles is known, the system using pin-diodes as switching elements. A similar vehicle antenna is illustrated in the figures of JP 2 062 131, also using a pin-diode as switching element.

DE 2 318 260 discloses a diversity system having two antennas and corresponding signal paths having controllable amplifiers and being combined to a common line using pin-diodes.

DE 3536826 A1 discloses a diversity antenna for mobile radio devices, having two antennas and a switch allowing to choose between the signals of the two antennas.

US 7,116,952 B2 discloses a diversity system having switches combining the output signals of several band filters connected in the signal path of an antenna. A LNA is provided for each switch thus maximizing costs and energy consumption.

DE 601 11 765 T2 discloses a wireless communication system having multiple transmission modes, in order to receive radio signals from desired senders, but to exclude signals from noise sources thereby using a plurality of antennas. However, this document does not contain any disclosure regarding to antenna circuits.

DE 20 2006 007 918 U1 discloses a receiver system comprising a plurality of antennas and a weighting means weighting and combining the individual antenna signals, in order to achieve an optimized performance of the transmitted signal. This system is very complicated due to its components since it needs a high capacity weighting processor as well as large code memories.

A special type of power supply of the signal level attenuator connected after the corresponding antenna in an antenna-diversity receiver is disclosed by WO 2008/074343.

US 2006/0067442 A1 discloses an antenna-diversity system with two antennas and a receiving channel, which can be switched via a switch from one antenna to another antenna. Switching to the other antenna occurs when stipulated criteria or threshold values concerning signal quality are reached. A diversity-judgment unit decides, as a function of signal intensity (determination of RSSI level) and the bit-error rate (BER), whether it is more favourable to switch to the other antenna. If the corresponding criteria for switching are met, the diversity-judgment unit controls a switch, via which the receiving channel can be alternately connected to one of the two antennas. The signal demodulated in the receiving channel represents a data stream during digital audio transmission which is organized in periodic transmission frames. A transmission frame, i.e., a defined data stream section, then consists of a preamble, the useful data (payload) and a so-called guard interval. The information contained in the preamble serves for synchronization of the transmitting signal with the receiver, the useful data contain the actual audio data, together with control and information data of the digital radio link, and can also have redundancy to recognize and correct bit errors during transmission. The guard interval, in which no audio information is transmitted, serves as blanking interval in order to be able to determine in real time the receiving intensity of the other antenna for a short time without audio interruption. Without this guard interval, it is not possible in an antenna-diversity system to switch to the other receiving antenna without undesired or audible interruptions in the audio stream.

This drawback cannot be made up in latency-critical radio applications, as in wireless stage engineering, even with error-correcting methods (forward error correction). The durations of an antenna switching process, measurement of the receiving field intensity on the other antenna and switching back to the original antenna, cannot be performed by bit error-correcting methods without keeping the audio transmission latency low and to an extent tolerable for use. Moreover, this is also not possible if the transmission quality is poor and error-correction of the system is already burdened with correcting bit errors in the transmission channel and provides a reduced time head room for antenna switching. Switching to another antenna without additional measures, therefore becomes noticeable in an audio signal as a disturbance, e.g., crackling.

DE 3 926 336 A1 discloses an antenna-diversity receiving system for mobile reception of television signals with several antenna inputs, with a diversity processor, also with several inputs, and with a down line television receiver. A time gate circuit is contained in the diversity processor, which is opened by the horizontal synchronization pulse during the horizontal blanking time and switches the video signal to the signal quality evaluation circuit. An output signal corresponding to the signal quality of the video signal is generated there, which is fed to a control circuit, which supplies a new antenna signal or a linear combination derived from the antenna signals to the television receiver via an antenna combiner. This receiving system functions on a purely analog basis. The problems that occur in digital switching, on the other hand, are entirely different.

EP 0 521 123 B2 discloses an antenna-diversity receiving system, in which several antennas can be joined via an antenna distributor with several channels (video signal, audio signal on the right, audio signal on the left, UKW). Each channel can be tapped independently of the other channel on each antenna. This again is exclusively analog signal processing to avoid reception disturbances.

An antenna-diversity receiver is also disclosed in US 2007/0019764 A1, or in US 2007/0168819 A1, whose object is a digital microphone.

The drawback of the prior art results from the fact that in the time interval of the guard interval and the antenna switching points defined with it, in which switching can be carried out without interrupting the audio, the receiving quality on the current antenna can already be strongly reduced from the preceding switching point. This can occur through the generally poor receiving situation, for example, the transmitter situated at the limit of the receiving range, or a dropout occurs. Consequently, undesired or unpleasant noise or brief but recordable interruption of the audio signal can occur for the listener. This drawback cannot be eliminated, in principle, and only an attempt made to keep its effect as limited as possible. This is possible by keeping the frame length as small as possible and therefore increasing the frequency of the switching points. One expedient which however, runs counter to this is to maximize the throughput rate of the useful data. In digital, professional wireless microphone, the data transmission rate actually represents one of the largest technical challenges. The audio quality required by users should exceed that of the analog system, in which case the transmitting bandwidth permitted from regulations may scarcely surpass that of the analog systems. The transmission channel therefore comes up against the limits of spectral efficiency of digital transmission methods, which forces the manufacturers to design the useful data rates as high as possible, without accepting deteriorations in receiving sensitivity, i.e., with the same transmitter-to-receiver range. The invention improves the prior art to the extent that the frame length of the useful data need not be shortened in order to guarantee audio transmission as free of interruptions as possible and therefore produce useful data rates that come close to the maximum useful data rate of a true diversity system. For professional digital audio wireless systems, the known systems described above are therefore scarcely suitable.

The invention sets itself the objective of overcoming the problems occurring in the prior art and providing a diversity-receiving unit, in which switching to another antenna is not audible in the audio signal itself, and transmission errors prior to the switching process are not recordable for the listener.

These objectives are achieved with the method of the type just mentioned, in that the digital audio data at times contains guard intervals between audio data with which no audio data are received, that switching to another antenna occurs during reception of the audio signal part, and that under the condition that receiving is poorer on the other antenna than on the original antenna, switching back to the original antenna occurs in the subsequent guard interval, according to the characterizing parts of Claims I and 2.

A new criterion for switching of the antenna is activation of dropout concealment, if, instead of the transmitted original signal, a concealment signal is switched to the output of the receiving channel. Since the concealment signal is synthesized, starting from an intact audio signal, in which both signal fractions before the disturbance and signal fractions after the disturbance can be incorporated, the transition and the period in which the concealment signal is switched is not recordable as a disturbance. The fact that signal fractions after the disturbance can also be used becomes possible by adding an additional latency for the entire system.

In the time, in which the concealment signal is active, a switch to the other antenna can be carried out and then the original signal released on the receiving channel with sufficient receiving quality on the other antenna without interruption.

The difference of error-correction and error-concealment lies in the fact that during error-concealment, no additional redundancy need be added to the original audio signal during source-coding in the transmitter before transmission. The rate of the useful data is therefore at maximum. The restored audio signal is obtained from statistical dependences of the audio material before and after receiving dropout, as described further below. Overblending of the original data with the concealment data and the reverse can also be imagined during concealment of antenna switching.

Switching to another antenna occurs in one variant of the invention during the concealment process, therefore at a time, at which the transmitted (defective) signal is no longer present at the output of the receiving channel, but already the synthesized concealment signal. Switching has no effects on the output signal, since the artificially created concealment signal is only replaced after switching by the signal from the now new antenna.

In a particularly practicable variant, the digital data stream contains so-called guard intervals. These are intervals in which no audio signals are transmitted. Switching to another antenna occurs within the guard interval so that no disturbances for the user are audible here either.

The invention is further explained below with reference to the drawing. In the drawing

Fig. 1 shows a schematic block diagram of a diversity-receiving unit according to the invention,
Fig. 2 shows a flow chart of the method according to the invention,
Fig. 3 shows a schematic block diagram, including the switching matrix, for two antennas and four receiving channels,
Fig. 4a shows the basic principle of dropout concealment,
Fig. 4b shows a data stream with periodic guard intervals, in which no audio information is transmitted,
Fig. 5 shows the principle of dropout concealment according to the publication: Goodman et al., "Waveform Substitution Techniques for Recovering Missing Speech Segments in Packet Voice Communications" IEEE Transactions on Acoustics, Speech, and Signal Processing, Vol. ASSP-34, No. 6, December 1986,
Fig. 6 shows a schematic representation of the transmission chain according to the invention,
Fig. 7 shows a detailed block diagram of the dropout concealment of the invention for a two-channel system,
Fig. 8 shows a block diagram of a multi-channel arrangement of, for example eight channels,
Fig. 9 shows a flowchart of the entire invention, consisting of the estimation of the spectral filter, the determination of the time delay between the channels, as well as the weighted superposition of all channels in order to generate the substitution signal, and
Fig. 10 shows the layout of the device according to the invention for dropout concealment that is to be integrated into each channel of the multi-channel arrangement.

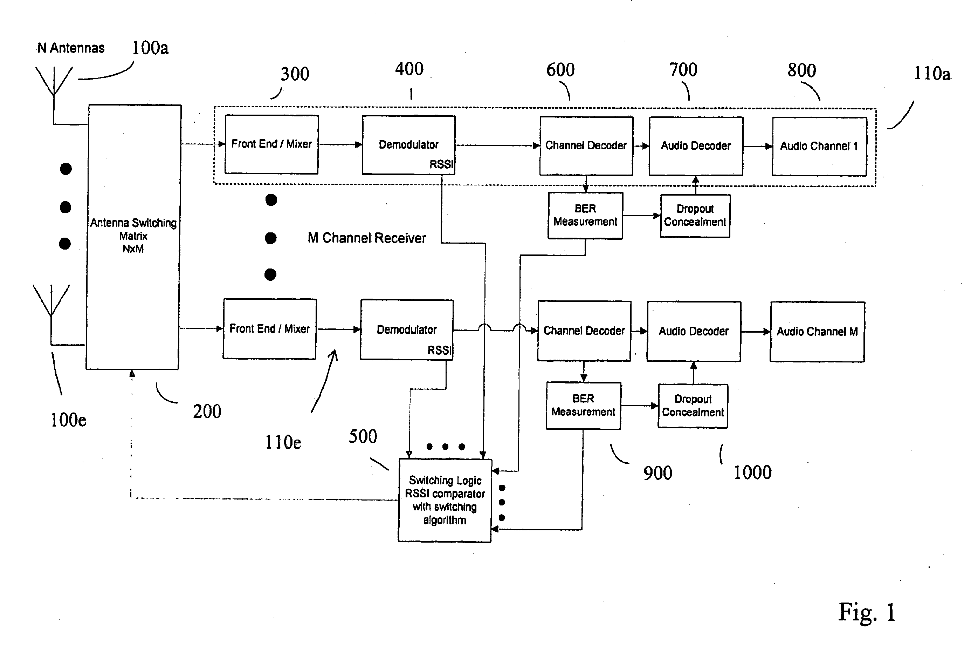

Fig. 1 shows a block diagram of a diversity-receiving device with several antennas 100a to 100e, which are connected via switching matrix 200 to receiving channels 110a to 110e. Each receiving channel includes a receiver front end 300 (which serves for pre-amplification, filtering and metering), a demodulator 400 (demodulates the carrier frequency), a channel decoder 600 (assigns analog signal shape bits) and an audio decoder 700 (here decoding and/or decompression of the audio files occurs). If the transmitted signals are always free of disturbances, these components would be sufficient to guarantee corresponding receiving quality.

Since disturbances (loss of received data) occur in reality, which - in many cases - are caused by fading (destructive multi-path propagation, dropout), measures must be taken to minimize transmission errors and make them inaudible. As can be seen from Fig. 1, the signal intensity of the modulated signal (for example, quantify by the RSSI level) is determined. The signal emerging from channel decoder 600 is checked in a bit error rate (BER) measurement unit with respect to bit error rate. It is also possible for the channel decoder to assume this task and furnish the information via the BER. If the RSSI level falls short of a predefined threshold value and/or the bit error rate surpasses a predefined threshold value, the dropout concealment is activated and a concealment signal is synthesized and placed on the receiving channel. This is fed to the audio decoder 700, at whose output the concealment signal is now present instead of the transmitted signal.

The switching matrix 200 is controlled by switching logic 500. It uses the information bit error rate of the BER measurement unit 900, and optionally the level of the signal (RSSI) from demodulator 400, in order to switch the optimal antenna to the receiving unit.

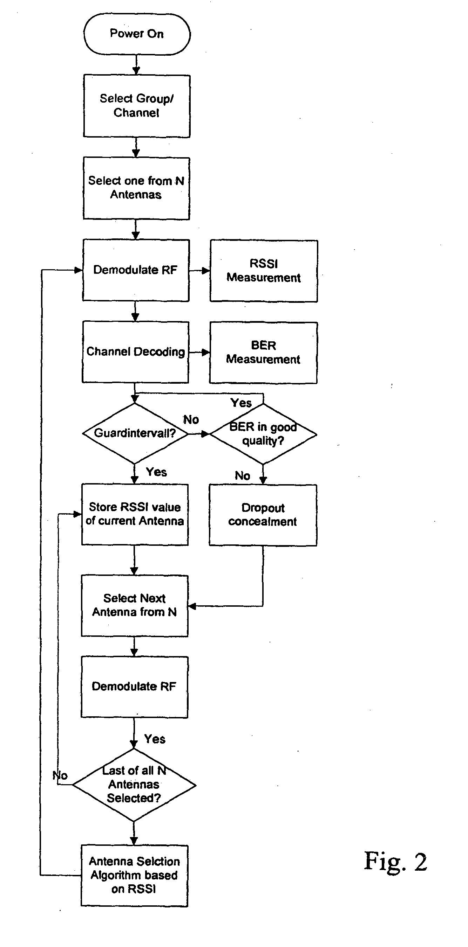

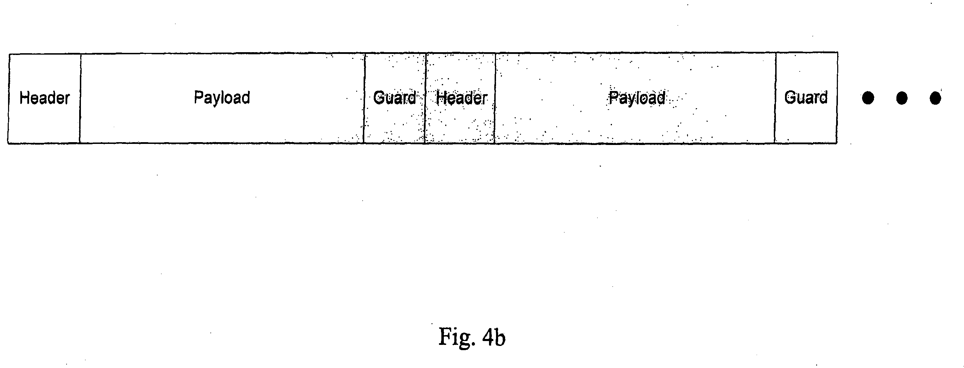

According to the invention, depending on whether concealment (dropout concealment unit 1000) was activated, a switch is made to another antenna. Fig. 2 shows a corresponding flowchart. As soon as dropout concealment is reactivated, the switching logic 500 begins to seek the optimal antenna again. With this method, now one no longer relies on the guard interval (Fig. 4b) to wait and only then carryout switching. Instead, during use of dropout concealment, a reaction can occur at any time and a change made to a better antenna. If the bit error rate in the newly selected antenna is of good quality beforehand, it waits to the next guard interval until switching logic 500 becomes active again.

Owing to the fact switching can be carried out between antennas while dropout concealment is active, i.e.,

during the audio data blocks (payload, Fig. 4b), it is no longer necessary, in principle, to introduce guard intervals into the data stream. Because of this, more audio data per unit time can be transmitted. Another variant can provide that guard intervals are present, but much shorter than in the prior art. If it was necessary to have a guard interval in the prior art, during which one switched to another antenna, and if this antenna has even poorer reception, can switch back again, it is possible through the invention to make the guard interval so short that only one switching process to another antenna is sufficient. A switching process occurring before or after can then occur during dropout concealment activity. For example, switching to another antenna during dropout concealment activity could occur and switching back from this antenna to the original antenna in the subsequent guard interval. With the present invention, not only transmission quality can therefore be improved, but also the audio data transmitted per unit time can be increased.

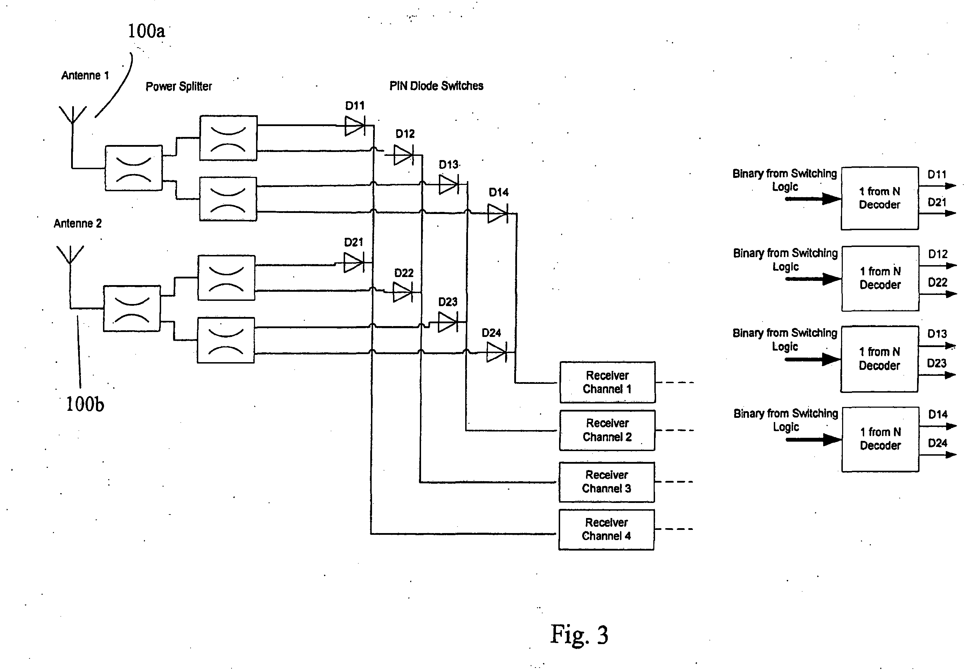

Fig. 3 shows a block diagram of a variant of an antenna switching matrix. This antenna switching matrix is laid out for two antennas, but can be expandable to three or more antennas. Overall, there are four receiving channels per antenna, each of which is branched by a power splitter.

The signal of each antenna is divided to the signal paths according to the number of receiving channels. There, the optimal antenna is switched to the corresponding receiving channel with multiplexers (for example, pin diode switches, common in HF technology). Only one diode of a diode pair D11 - D21; D12 - D22; D13 - D23; D14 - D24 is always active. In the general case with N antennas and M receivers, M-1 power splitters with 2 outputs per antenna are required (with about log_2(M) consecutive arrangements). And M HF multiplexers with N inputs, i.e., MxN diode switches. These switches are controlled by M "1 of N" decoders, in which only one of the D1x, D2x, D3x, ..., DMx diodes is active.

Dropout concealment could occur as follows: A standard method is described, for example, in the publication: Goodman et al., "Waveform Substitution Techniques for Recovering Missing Speech Segments in Packet Voice Communications", IEEE Transactions on Acoustics, Speech, and Signal Processing, Vol. ASSP-34, No. 6, December 1986.

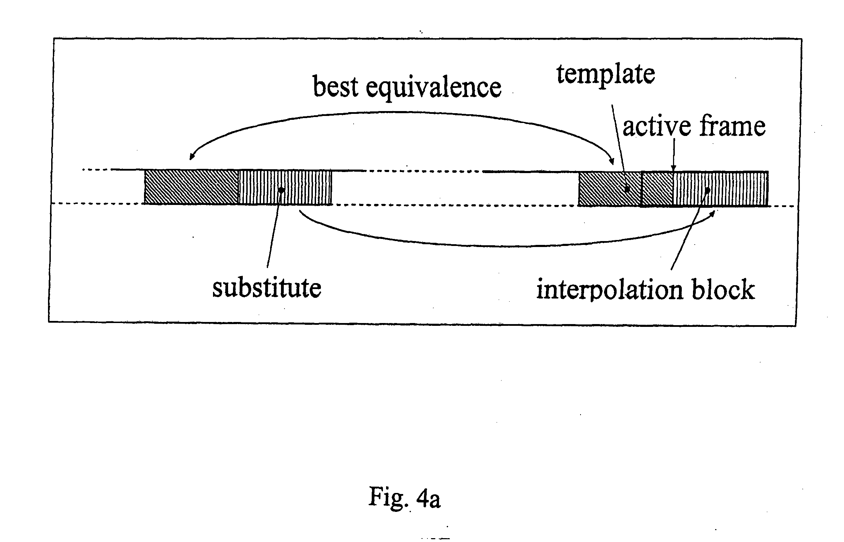

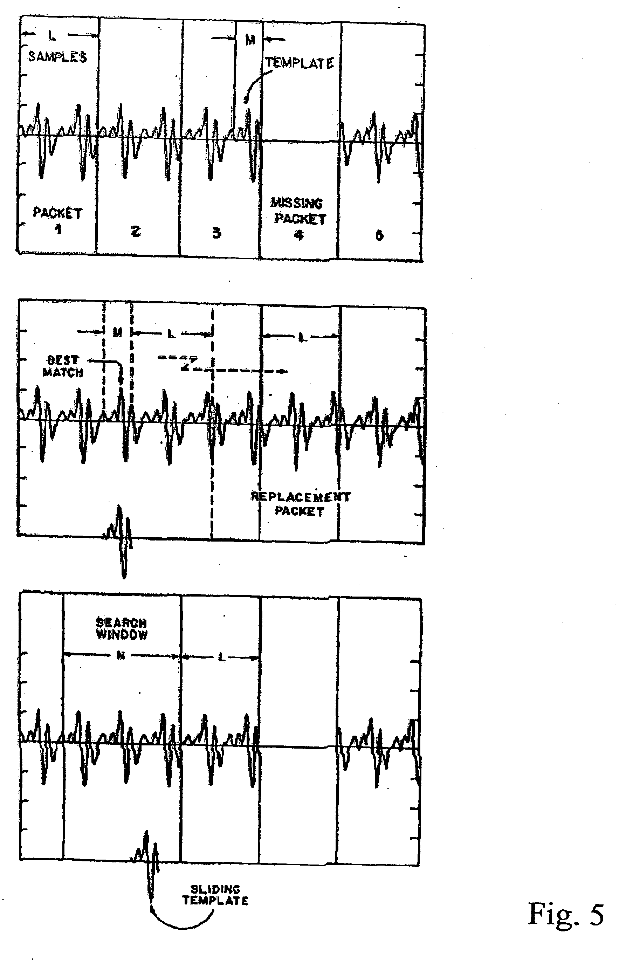

The basis of the method sketched in Fig. 4a and 5 is period estimation, in which the period of the audio signal is estimated and the audio signal then continued from the past.

For this purpose, right before dropout of the audio signal (referred to as active frame in Fig. 4a), the so-called template is taken from the signal cut-out and sought in the past (period estimation). The signal after the template equivalent is copied from the past and inserted forward to mask the signal dropout.

The template is compared with the past alternatively, for example, by the following formulas:

Autocorrelation:

$$r(\tau) = \frac{1}{N} \sum_{n=0}^{N-1} x_S(n) x_P(n+\tau)$$

or: Average magnitude difference function (AMDF)

$$\sum_{n=0}^{N-1} \left| x_S(n) - x_P(n+T_0) \right| = 0 \quad \text{and} \quad \sum_{n=0}^{N-1} \left[ x_S(n) - x_P(n+T_0) \right]^2 = 0$$

or: Difference functions (Goodman, et al., 1986):

$$d_4(\tau) = \frac{1}{N} \sum_{n=0}^{N-1} \left| \frac{x_S(n)}{\sqrt{\sum_{j=0}^{N-1} x_S(j)^2}} - \frac{x_P(n+\tau)}{\sqrt{\sum_{j=0}^{N-1} x_P(j+\tau)^2}} \right|$$

$$d_5(\tau) = \frac{1}{N}\sum_{n=0}^{N-1}\left| \frac{x_S(n)}{\sum_{j=0}^{N-1}\left|x_S(j)\right|} - \frac{x_P(n+\tau)}{\sum_{j=0}^{N-1}\left|x_P(j+\tau)\right|}\right|$$

$$d_6(\tau) = \frac{1}{N}\sum_{n=0}^{N-1}\left| \frac{x_S(n)}{x_{S,\max} - x_{S,\min}} - \frac{x_P(n+\tau)}{x_{P,\max} - x_{P,\min}}\right|$$

Another possible example of dropout concealment methods is described further below, in which it is also disclosed in WO 2008/067834 A1.

The WO 2008/067834 A1 discloses methods, which can be applied to an individual channel and also in the sense of the multi-channel concealment. In the latter case, the information of the adjacent channels would be used in order to mask the signal of one channel. In this case, the channels would no longer be independent from each other, at least during concealment. This multi-channel dropout concealment could be implemented with a diversity-receiving unit according to Fig. 3.

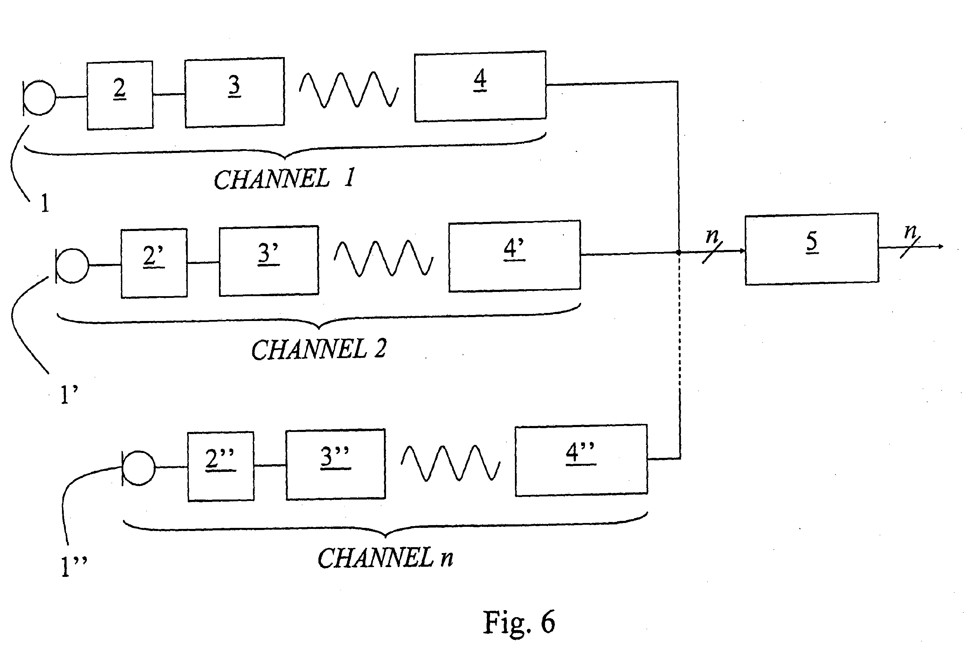

The entire structure of a transmission chain is depicted in Fig. 6 and typically comprises the following stages for one channel: Signal source 1, e.g. a sensor for recording signals (microphone), analog-digital converter 2 (ADC), optional signal compression and coding on the transmitter side, transmitter 3, transmission channel, receiver 4, concealment module 5. At the output of the concealment module 5, the audio signal is available in digital form - further signal processing units can be connected directly, for example a pre-amp, equalizer, etc.

The concealment method is independent of the transmitter/receiver unit as well as the source coding and acts solely on the receiver side (receiver-based technique). It can therefore be integrated flexibly as an independent module into any transmission path. In some transmission systems (e.g. digital audio streaming), different concealment strategies are implemented simultaneously. While the application shown in Fig. 6 does not provide for any further concealment units, a combination with alternative technologies is possible.

In the following, the dropout concealment method is described for *one* channel afflicted with dropouts. If transmission errors occur in more than one channel of the multi-channel arrangement, the system can easily be expanded. The channel afflicted with dropouts is defined as target channel or signal. The replica (estimation) of this signal that is to be generated during dropout periods is referred to as replacement signal. At least one substitution channel is required for the computation of the replacement signal. The algorithm is composed of two parts. Computations of the first part are carried out permanently, whereas the second part is only activated in the case of a dropout in the target channel. During error-free transmission, the coefficients of a linear-phase FIR (finite impulse response) filter of length $L_{Filter}$ are permanently being estimated in the frequency domain. The required information is provided by the optionally non-linearly distorted and optionally time-averaged short-term magnitude spectra of the target and substitution channel. This new type of filter computation disregards any phase information and thus, differs fundamentally from the correlation-dependent adaptive filters.

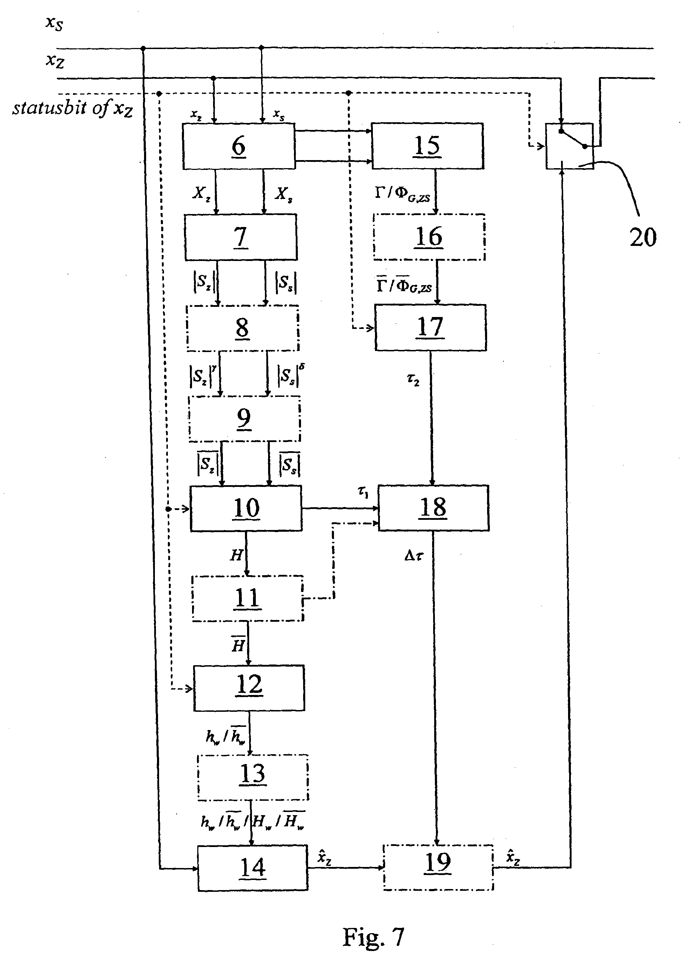

Fig. 7 shows a block diagram of the multi-channel dropout concealment method for a target signal $x_Z$ and a substitution signal $x_S$. The individual steps of the method are each indicated by a box containing a reference symbol and denoted in the subsequent table:

6     Transformation into a spectral representation,
7     Determination of the envelope of the magnitude spectra,
8     Non-linear distortion (optional),
9     Time-averaging (optional),
10    Calculation of the filter coefficients,
11    Time-averaging of the filter coefficients (optional),
12    Transformation into the time domain with windowing,
13    Transformation into the frequency domain (optional),
14    Filtering of the substitution signal respectively in time or frequency domain,
15    Estimation of the complex coherence function or GXPSD,

16    Time-averaging (optional),
17    Estimation of the GCC and maximum detection in the time domain,
18    Determination of the time delay $\Delta\tau$,
19    Implementation of the time delay $\Delta\tau$ (optional), and
20    switch.

The correct selection of a substitution channel depends on the similarity between the substitution and target signal. This correlation can be determined by estimating the cross-correlation or coherence.

The computation during error-free transmission is performed in frequency domain, thus in a first step an appropriate short-term transformation is necessary, resulting in a block-oriented algorithm that requires a buffering of target and substitution signal.

If a dropout is detected in the target signal (e.g. as represented in Fig. 7 by a status bit "dropout y/n"; the dotted line denotes the status bit that is actually transmitted contiguously with the audio signal), the replacement signal must be generated using the lastly estimated filter coefficients and the substitution channel(s), and is directly fed to the output of the concealment unit. During a dropout, the estimation of the filter coefficients is deactivated. Basically, the transition between target and replacement signal can be implemented by a switch, assuming any switching artefacts remaining inaudible.

The replacement signal is finally generated through filtering of the substitution signal with the filter coefficients retransformed into the time domain.

The individual processing steps are summarized in a block diagram in Fig. 7 for one target and one substitution signal. The transition between target and replacement signal or vice-versa is depicted as a simple switch in the graphic; a cross-fade of the signals is recommendable.

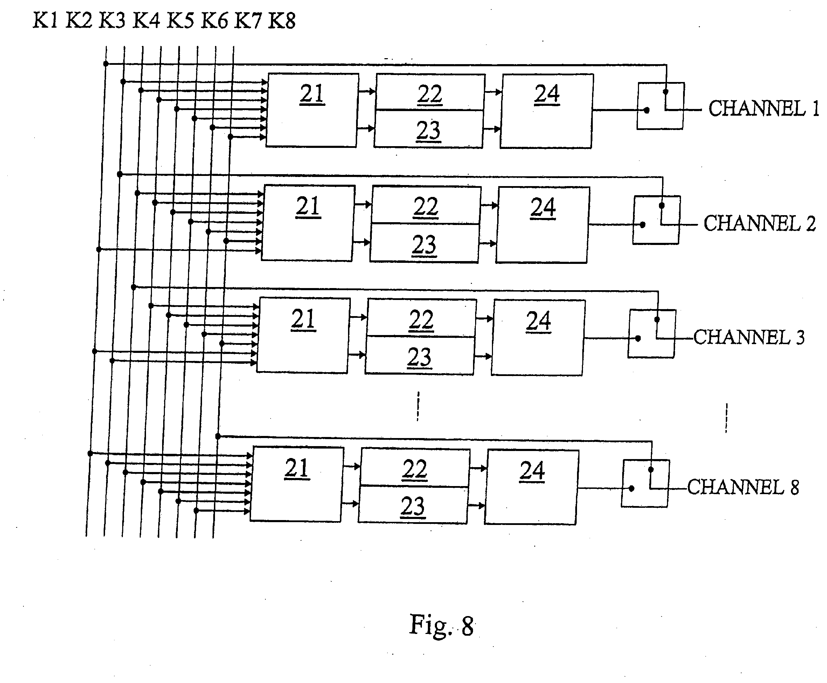

A multi-channel setup with more than two channels is depicted in Fig. 8. Depending on which channel is affected by dropouts and hence becomes the target channel, the substitution signal is generated with the remaining intact channels. The discrete blocks of Fig. 8 correspond to the following processing steps:

21    Selection of the substitution channel(s),
22    Calculation of the filter coefficients,
23    Application of a time delay, and
24    Generation of a replacement signal.

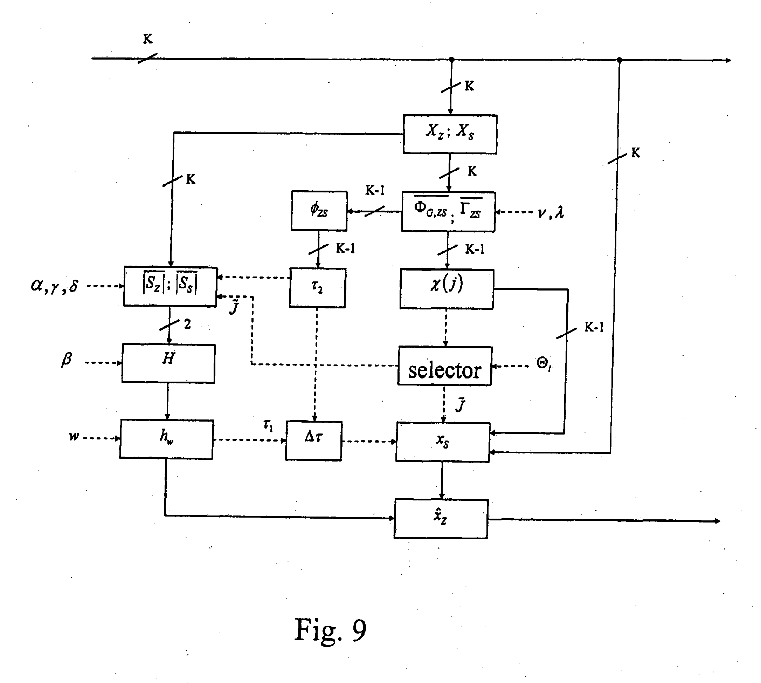

Fig. 9 shows a schematic of the basic algorithm in combination with the expansion stage (i.e. time delay estimation) to illustrate the mutual dependencies of the individual processing steps.

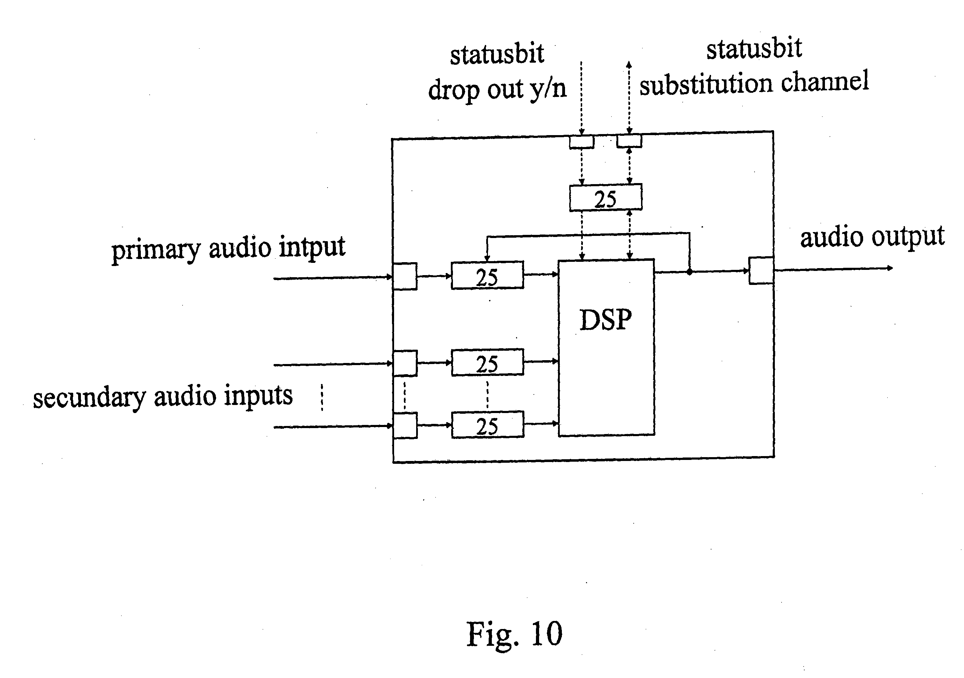

Accordingly, for each channel of a multi-channel arrangement, an appropriate device, such as exemplarily depicted in Fig. 10, is necessary that preferably may be integrated directly into the apparatus for receiving and decoding the transmitted digital audio data.

The apparatus for dropout concealment is equipped with a primary audio input that adopts the digital signal frames from the receiver unit and temporarily stores them in a storage unit 25. The apparatus is equipped with at least one secondary audio input, optionally several secondary audio inputs, at which the digital data of the substitution channel(s) are available and likewise stored temporarily in one, optionally several, storage unit(s) 25.

In order to forward the original or concealed data frames of the primary channel, the apparatus is equipped with an audio output.

## Claims

1.    Method for receiving digital audio data with a diversity-receiving unit, which has at least two antennas (100a, 100b) and at least one receiving channel (110a), which can be switched from one antenna (100a or 100b) to another antenna (100a or 100b), wherein in the receiving channel (110a), dropout concealment is carried out when disturbances occur in the received audio signal, in which the dropout concealment uses intact audio signal parts before the disturbance and/or after the disturbance to synthesize a concealment signal, and that the receiving channel (110a) is switched to another antenna (100a, 100b) as a function of whether the dropout concealment is activated, **characterized in that** the digital audio data at times contains guard intervals between audio data with which no audio data are received, that switching to another antenna (100a, 100b) occurs during reception of the audio signal part, and that under the condition that receiving is poorer on the other antenna (100a or 100b) than on the original antenna (100a or 100b), switching back to the original antenna (100a or 100b) occurs in the subsequent guard interval.

2.    Diversity-receiving device with a diversity-receiving unit for digital audio data, which comprises at least two antennas (100a, 100b) and at least one receiving channel (110a), in which a switching unit is provided, through which at least one receiving channel (110a) can be switched from one antenna (100a or 100b) to another antenna (100a or 100b), and a dropout concealment, which uses intact audio signal parts before the disturbance and/or after the disturbance to synthesize a concealment signal, **characterized in that** in the receiving channel (110a) a concealment unit (1000) is coupled with the switching unit, wherein the digital audio data at times contains guard intervals between audio data with which no audio data arc received, wherein switching to another antenna (100a, 100b) occurs during reception of the audio signal part and the concealment unit (1000) is configured to synthesize a concealment signal in response to occurrence of disturbance in the received radio signal, and that the switching unit is configured to switch the receiving channel (110a) between the first of the at least two antennas (100a, 100b) and the second of the at least two antennas (100a, 100b) only after the synthesized concealment signal is supplied on the receiving channel (110a), and that under the condition that receiving is poorer on the other antenna (100a or 100b) than on the original antenna (100a or 100b), switching back to the original antenna (100a or 100b) occurs in the subsequent guard interval.

3. Diversity-receiving device according to Claim 2, **characterized in that** at least two receiving channels (110a, 110b) are provided, which can be switched to each antenna (100a, 100b) independently of each other.

**Patentansprüche**

1. Verfahren zum Empfangen von digitalen Audiodaten mit einer Diversity-Empfangseinheit, die mindestens zwei Antennen (100a, 100b) und mindestens einen Empfangskanal (110a), der von einer Antenne (100a oder 100b) auf eine andere Antenne (100b oder 100a) geschaltet werden kann, aufweist, wobei im Empfangskanal (110a) ein dropout concealment durchgeführt wird, wenn Störungen im empfangenen Audiosignal auftreten, wobei das dropout concealment intakte Audiosignalteile vor der Störung und/oder nach der Störung zur Synthetisierung eines Verschleierungssignals heranzieht, und dass der Empfangskanal (110a) in Abhängigkeit davon, ob das dropout concealment aktiviert ist, auf eine andere Antenne (100a, 100b) umgeschaltet wird, **dadurch gekennzeichnet, dass** der digitale Datenstrom jeweils zwischen Audiodaten Guard Intervalle enthält, mit denen keine Audiodaten übertragen werden, und dass das Umschalten des Empfangskanals auf eine andere Antenne (100a, 100b) während der Übertragung des Audiosignalanteils erfolgt, und dass, unter der Voraussetzung, dass der Empfang an der anderen Antenne schlechter ist als an der ursprünglichen Antenne, das Zurückschalten auf die ursprüngliche Antenne im darauffolgenden Guard Intervall erfolgt.

2. Diversity-Empfangsvorrichtung mit einer Diversity-Empfangsvorrichtung für digitale Audiodaten, mit zumindest zwei Antennen (100a, 100b) und zumindest einem Empfangskanal (110a), wobei eine Schalteinheit vorgesehen ist, durch die zumindest ein Empfangskanal (110a) von einer Antenne (100a oder 100b) auf eine andere Antenne (100b oder 100a) geschaltet werden kann, mit einem dropout concealment, das intakte Audiosignalteile vor der Störung und/oder nach der Störung zur Synthetisierung eines Verschleierungssignals heranzieht, **dadurch gekennzeichnet, dass** im Empfangskanal (110a) eine Verschleierungseinheit (1000) vorgesehen ist, die mit einer Schalteinheit verknüpft ist, dass der digitale Datenstrom jeweils zwischen Audiodaten Guard Intervalle enthält, mit denen keine Audiodaten übertragen werden, und dass das Umschalten des Empfangskanals auf eine andere Antenne (100a, 100b) während der Übertragung des Audiosignalanteils erfolgt, und dass die Verschleierungseinheit (1000) so konfiguriert ist, dass sie ein Verschleierungssignal als Antwort auf das Auftreten einer Störung im erhaltenen Audiosignal synthetisiert, und dass die Schalteinheit so konfiguriert ist, das sie den Empfangskanal zwischen der ersten der zumindest zwei Antennen (100a, 100b) und der zweiten der zumindest zwei Antennen (100a, 100b) nur umschaltet, nachdem das synthetisierte Verschleierungssignal dem Empfangskanals (110a) zugeführt ist, und dass, unter der Voraussetzung, dass der Empfang an der anderen Antenne schlechter ist als an der ursprünglichen Antenne, das Zurückschalten auf die ursprüngliche Antenne im darauffolgenden Guard Intervall erfolgt

3. Diversity-Empfangsvorrichtung nach Anspruch 2, **dadurch gekennzeichnet, dass** mindestens zwei Empfangskanäle (110a, 110b) vorgesehen sind, die unabhängig voneinander auf jede Antenne (100a, 100b) umgeschaltet werden können.

**Revendications**

1. Procédé de réception de données audio numériques avec une unité de réception en diversité, qui a au moins deux antennes (100a, 100b) et au moins un canal de réception (110a) pouvant être commuté d'une antenne (100a ou 100b) à une autre antenne (100a ou 100b), dans lequel, dans le canal de réception (110a), un masquage de pertes est effectué lorsque des perturbations apparaissent sur le signal audio reçu, dans lequel le masquage de pertes utilise des parties de signal audio intactes avant la perturbation et/ou après la perturbation pour synthétiser un signal de masquage, et que le canal de réception (110a) est commuté vers une autre antenne (100a, 100b) en fonction de l'activation du masquage de pertes, **caractérisé en ce que** les données audio numériques contiennent de temps à autre des intervalles de garde entre des données audio au cours desquels aucune donnée audio est reçue, que la commutation vers une autre antenne (100a, 100b) se produit au cours de à réception de la partie de signal audio, et que sous condition que la réception est plus faible sur l'autre antenne (100a ou 100b) que sur l'antenne originale (100a ou 100b), le retour vers l'antenne originale (100a ou 100b) se produit dans l'intervalle de garde subséquent.

2.  Dispositif de réception en diversité avec une unité de réception en diversité pour des données audio numériques, qui comprend au moins deux antennes (100a, 100b) et au moins un canal de réception (110a), dans lequel on prévoit une unité de commutation par laquelle au moins un canal de réception (110a) peut être commuté d'une antenne (100a ou 100b) vers une autre antenne (100a ou 100b), et un masquage de pertes qui utilise des parties de signal audio intactes avant la perturbation et/ou après la perturbation pour synthétiser un signal de masquage, **caractérisé en ce que**, dans le canal de réception (110a), une unité de masquage (1000) est couplée avec l'unité de commutation, dans lequel les données audio numériques contiennent de temps à autre des intervalles de garde entre des données audio au cours desquels aucune donnée audio est reçue, dans lequel la commutation vers une autre antenne (100a, 100b) se produit lors de la réception de la partie de signal audio, et l'unité de masquage (1000) est configurée pour synthétiser un signal de masquage en réponse à l'apparition d'une perturbation dans le signal radio reçu, et que l'unité de commutation est configurée pour commuter le canal de réception (110a) entre la première des au moins deux antennes (100a, 100b) et à deuxième des au moins deux antennes (100a, 100b) seulement après fourniture du signal de masquage synthétisé sur à canal de réception (110a), et que sous condition que la réception est plus faible sur l'autre antenne (100a ou 100b) que sur l'antenne originale (100a ou 100b), le retour vers l'antenne originale (100a ou 100b) se produit dans l'intervalle de garde subséquent.

3.  Dispositif de réception en diversité selon la revendication 2, **caractérisé en ce qu'**on prévoit au moins deux canaux de réception (110a, 110b) qui peuvent être commutés indépendamment vers chaque antenne (100a, 100b).

N Antennas    100a

300    400    600    700    800    110a

```
Front End / Mixer → Demodulator RSSI → Channel Decoder → Audio Decoder → Audio Channel 1
```

Antenna Switching Matrix NxM

M Channel Receiver

BER Measurement → Dropout Concealment

```
Front End / Mixer → Demodulator RSSI → Channel Decoder → Audio Decoder → Audio Channel M
```

BER Measurement → Dropout Concealment

100e    200    110e    500    900    1000

Switching Logic RSSI comparator with switching algorithm

Fig. 1

Power On

Select Group/
Channel

Select one from N
Antennas

Demodulate RF → RSSI
Measurement

Channel Decoding → BER
Measurement

Guardintervall? —No→ BER in good
quality?

Yes (from Guardintervall)

Yes (from BER in good quality)

No (from BER in good quality)

Store RSSI value
of current Antenna

Dropout
concealment

Select Next
Antenna from N

Demodulate RF

Yes

Last of all N
Antennas
Selected?

No

Antenna Selction
Algorithm based
on RSSI

Fig. 2

12

Fig. 3

Fig. 4a

EP 2 207 273 B1

Fig. 4b

Fig. 5

Fig. 6

CHANNEL 1

CHANNEL 2

CHANNEL n

Fig. 7

K1 K2 K3 K4 K5 K6 K7 K8

Fig. 8

EP 2 207 273 B1

Fig. 9

Fig. 10

## REFERENCES CITED IN THE DESCRIPTION

### Patent documents cited in the description

- US 4942622 A
- WO 9604653 A
- US 5697075 A
- US 6871054 B2
- JP 2305234 A
- JP 2001326593 A
- JP 61073437 B
- JP 10163941 B
- JP 8107306 A
- JP 2062131 A
- DE 2318260
- DE 3536826 A1
- US 7116952 B2
- DE 60111765 T2
- DE 202006007918 U1
- WO 2008074343 A
- US 20060067442 A1
- DE 3926336 A1
- EP 0521123 B2
- US 20070019764 A1
- US 20070168819 A1
- WO 2008067834 A1

### Non-patent literature cited in the description

- **GOODMAN et al.** Waveform Substitution Techniques for Recovering Missing Speech Segments in Packet Voice Communications. *IEEE Transactions on Acoustics, Speech, and Signal Processing,* December 1986, vol. ASSP-34 (6